# EUROPEAN PATENT APPLICATION

(11) **EP 4 482 164 A1**
(43) Date of publication of application: **25.12.2024**
(21) Application number: 22927354.5
(22) Date of filing: 23.12.2022
(51) Int. Cl.: H04N 23/60, A63F 13/213, A63F 13/25, A63F 13/85, G06F 3/01, G06T 19/00, G06T 19/20

(54) **INFORMATION PROCESSING DEVICE AND INFORMATION PROCESSING METHOD**

(30) Priority: 15.02.2022 JP 2022021304
(71) Applicant: Sony Interactive Entertainment Inc., Tokyo 108-0075 (JP)
(72) Inventor: QU Jiawen, Tokyo 108-0075 (JP); HAYAKAWA Yuto, Tokyo 108-0075 (JP); MINAMINO Takanori, Tokyo 108-0075 (JP)
(74) Representative: D Young & Co LLP
(86) International application number: PCT/JP2022/047634
(87) International publication number: WO 2023/157471

(57) **Abstract**

Provided is an image generation device which detects an obstacle that is present in the surrounding space, on the basis of a captured image obtained by a stereo camera of a head-mounted display, and sets a boundary 72 of a play area in which a user wearing the head-mounted display is allowed to move. When a new obstacle is detected inside the play area, the image generation device generates tangent lines 82a and 82 from an observation point H on a floor surface to a contour 80 of the obstacle and uses the tangent lines and a portion which is a part of the contour 80 and which is between tangent points AB to set a new boundary 86 of the play area.

## Description

### [Technical Field]

The present invention relates to an information processing device and an information processing method which process data relating to a head-mounted display.

### [Background Art]

An image display system which allows a user wearing a head-mounted display to view a target space from free viewpoints is widely used. For example, there is known electronic content which has, for example, a virtual three-dimensional space as a display target and causes an image corresponding to a direction of the line of sight of the user to be displayed on the head-mounted display, thereby realizing virtual reality (VR). It is also possible to increase, by using the head-mounted display, a sense of immersion into a video or to increase operability of an application such as a game. Moreover, there has also been developed a walkthrough system which allows a user wearing a head-mounted display to virtually walk around in a space displayed as video by physically moving.

### [Summary]

### [Technical Problem]

It is required to limit a movable range of the user wearing the head-mounted display during the play of the application according to an environment such as a size of a room of the user and installed furniture and luggage in the room of the user. Meanwhile, there is such a dilemma that the original amusement property of content is lost or the user is stressed due to excessive restriction.

The present invention has been made in view of the problem described above and has an objective to provide a technology which enables easy and appropriate setting of a play area in which a user wearing a head-mounted display can move.

### [Solution to Problem]

In order to solve the problem described above, one aspect of the present invention relates to an information processing device. This information processing device includes a camera image acquisition section that acquires data regarding a camera image which is captured by a camera mounted to a head-mounted display and in which a surrounding space of a user appears, a play area setting section that detects an obstacle in the surrounding space on the basis of the camera image and sets, on the basis of a result of the detection, a play area in which the user is allowed to move, and a warning processing section that executes warning processing for the user according to a relation between a position of the user during play of an application that uses the head-mounted display and a boundary of the play area. The play area setting section identifies a positional relation between the boundary of the set play area and a newly detected obstacle and determines whether or not to correct the boundary of the play area according to a result of the identification.

Another aspect of the present invention relates to an information processing method. This information processing method includes a step of acquiring data regarding a camera image which is captured by a camera mounted to a head-mounted display and in which a surrounding space of a user appears, a step of detecting an obstacle in the surrounding space on the basis of the camera image and setting, on the basis of a result of the detection, a play area in which the user is allowed to move, and a step of executing warning processing for the user according to a relation between a position of the user during play of an application that uses the head-mounted display and a boundary of the play area. The step of setting the play area identifies a positional relation between the boundary of the set play area and a newly detected obstacle and determines whether or not to correct the boundary of the play area according to a result of the identification.

Note that any combination of the foregoing components and any conversion of the expressions of the present invention from/to systems, computer programs, recording media having recorded thereon computer programs in a readable manner, data structures, and the like are also effective as aspects of the present invention.

### [Advantageous Effect of Invention]

According to the present invention, it is possible to easily and appropriately set the play area in which the user wearing the head-mounted display is allowed to move.

### [Brief Description of Drawings]

[FIG. 1]

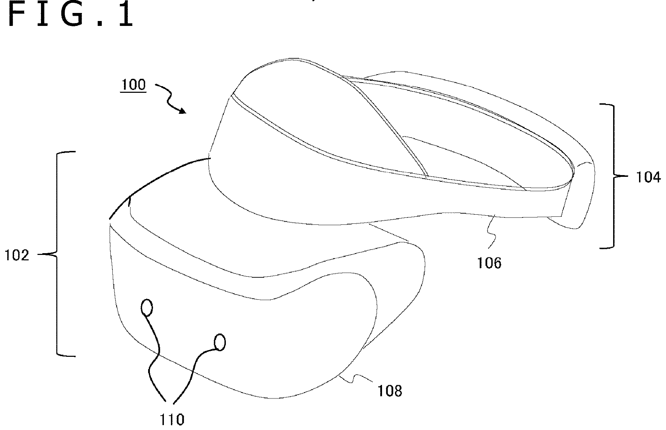

   FIG. 1 is a view for illustrating an example of an appearance of a head-mounted display in the present embodiment.
[FIG. 2]

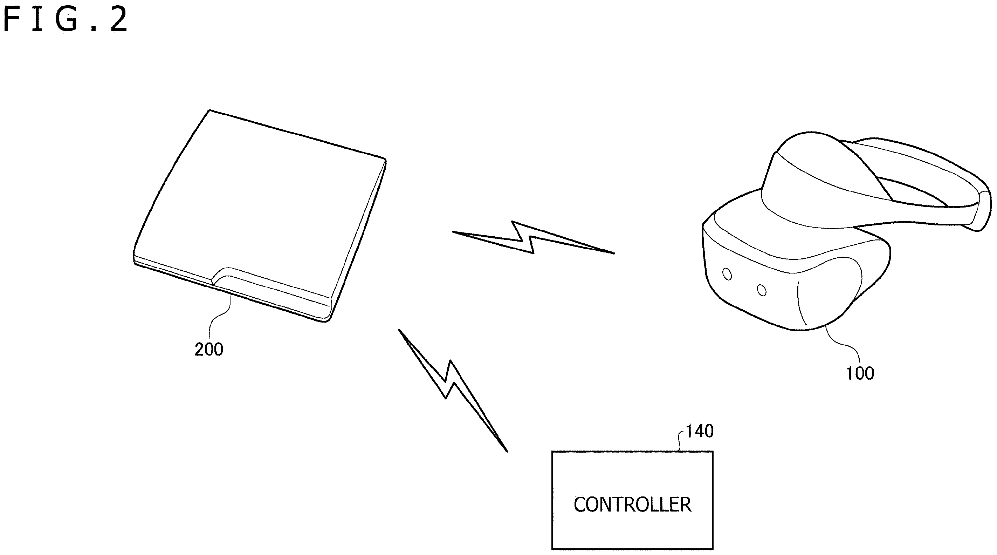

   FIG. 2 is a view for illustrating a configuration example of an image display system in the present embodiment.
[FIG. 3]

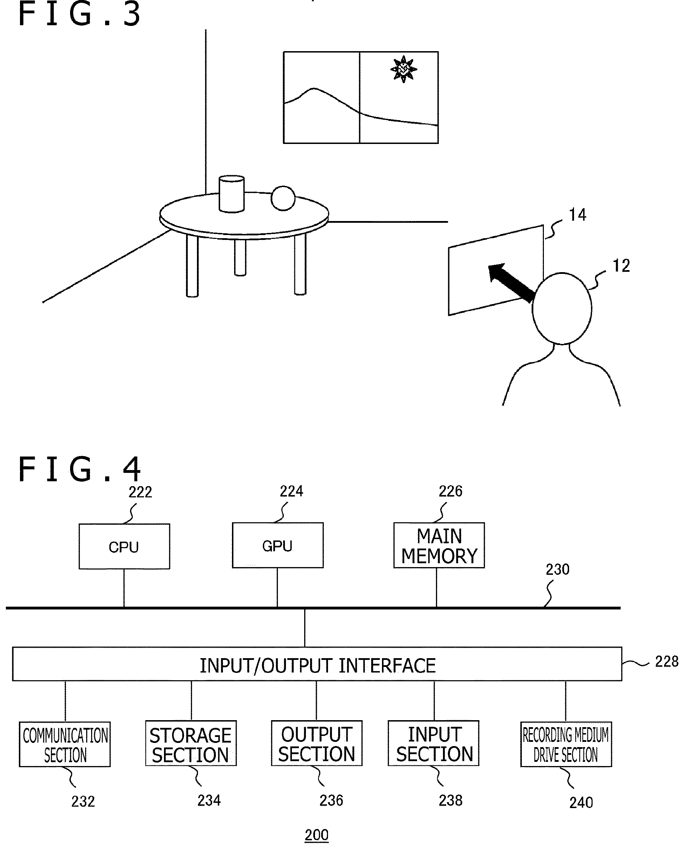

   FIG. 3 is a view for describing an example of an image world which an image generation device causes to be displayed on the head-mounted display in the present embodiment.
[FIG. 4]
   FIG. 4 is a diagram for illustrating an internal circuit configuration of the image generation device in the present embodiment.
[FIG. 5]

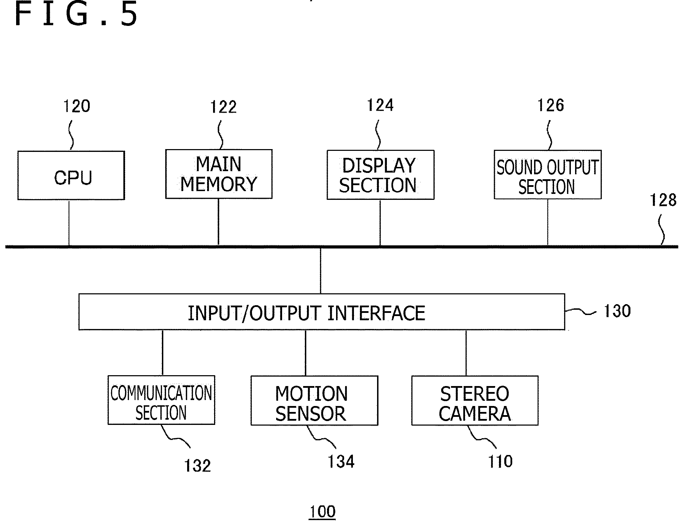

   FIG. 5 is a diagram for illustrating an internal circuit configuration of the head-mounted display in the present embodiment.
[FIG. 6]

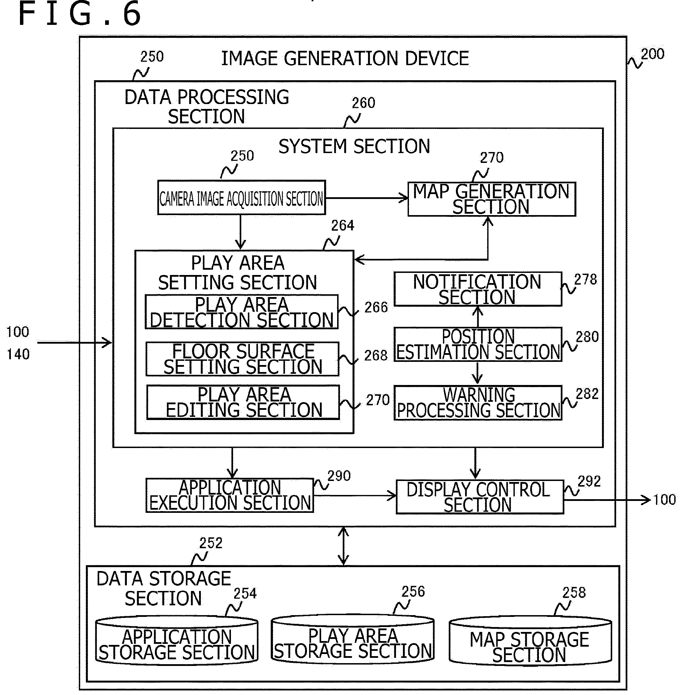

   FIG. 6 is a block diagram for illustrating functional blocks of the image generation device in the present embodiment.
[FIG. 7]

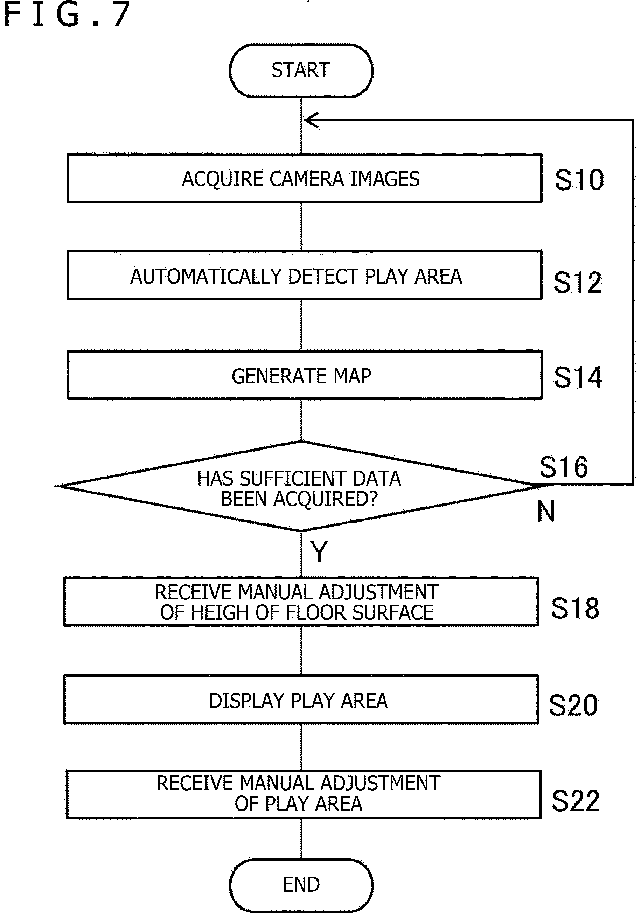

   FIG. 7 is a flowchart for illustrating an operation of the image generation device when a play area is set in the present embodiment.
[FIG. 8]

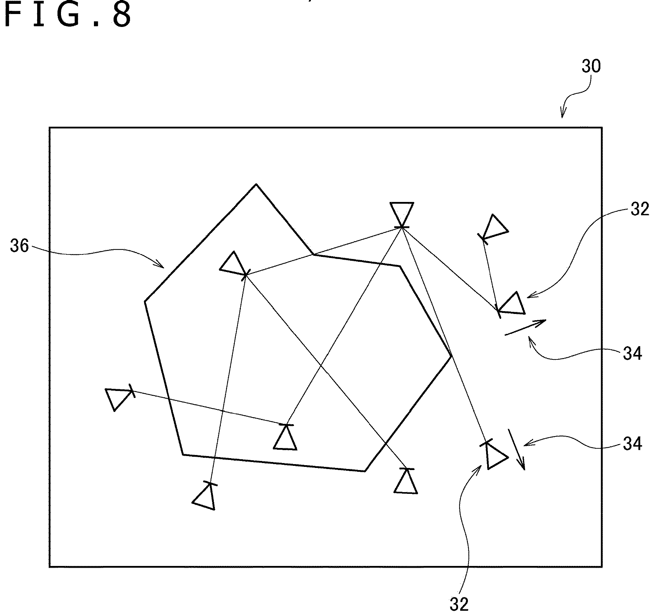

   FIG. 8 is a diagram for schematically illustrating a behavior of a user in loop processing in S10 to S14 of FIG. 7.
[FIG. 9]

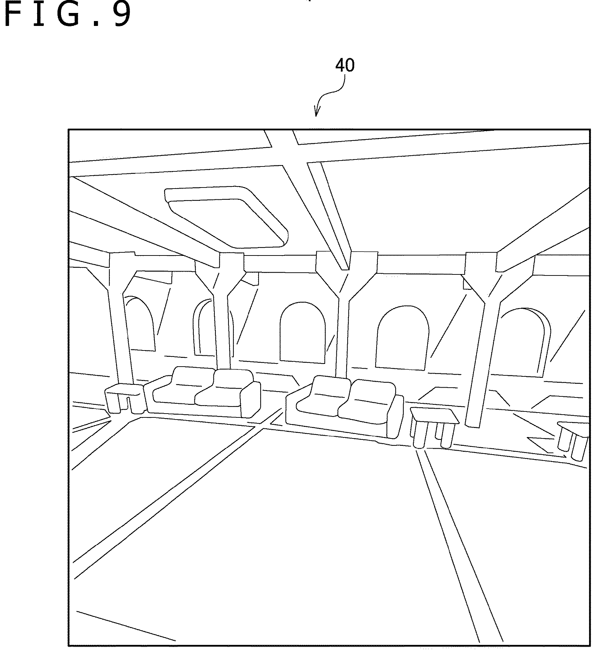

   FIG. 9 is a view for illustrating an example of a camera image acquired by a camera image acquisition section in processing in S10 of FIG. 7.
[FIG. 10]

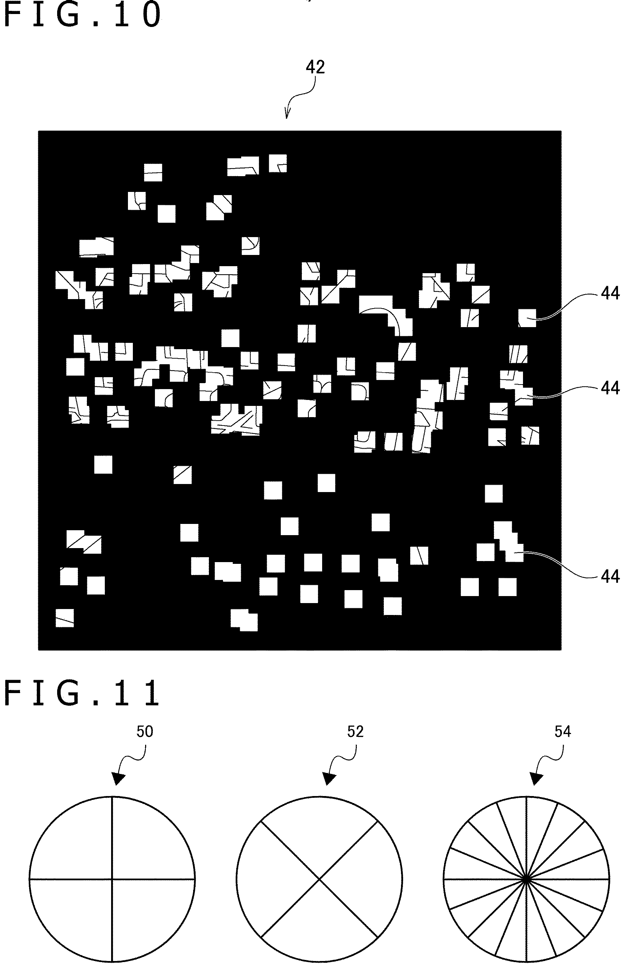

   FIG. 10 is a view for illustrating a data example of keyframes generated from the camera image of FIG. 9.
[FIG. 11]
   FIG. 11 is a diagram for illustrating a plurality of bins which can be employed in the present embodiment.
[FIG. 12]

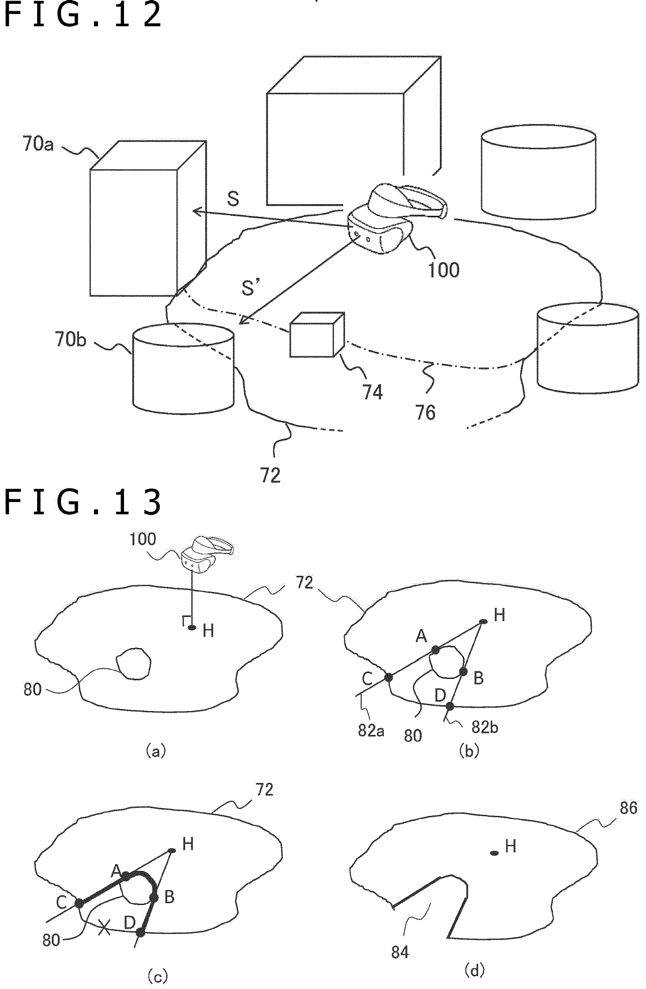

   FIG. 12 is a view for schematically illustrating a scene in which a play area detection section sets a boundary of the play area in the present embodiment.
[FIG. 13]
   FIG. 13 is a view for describing an example of a correction procedure for the play area when the play area detection section detects another obstacle inside the set play area in the present embodiment.
[FIG. 14]

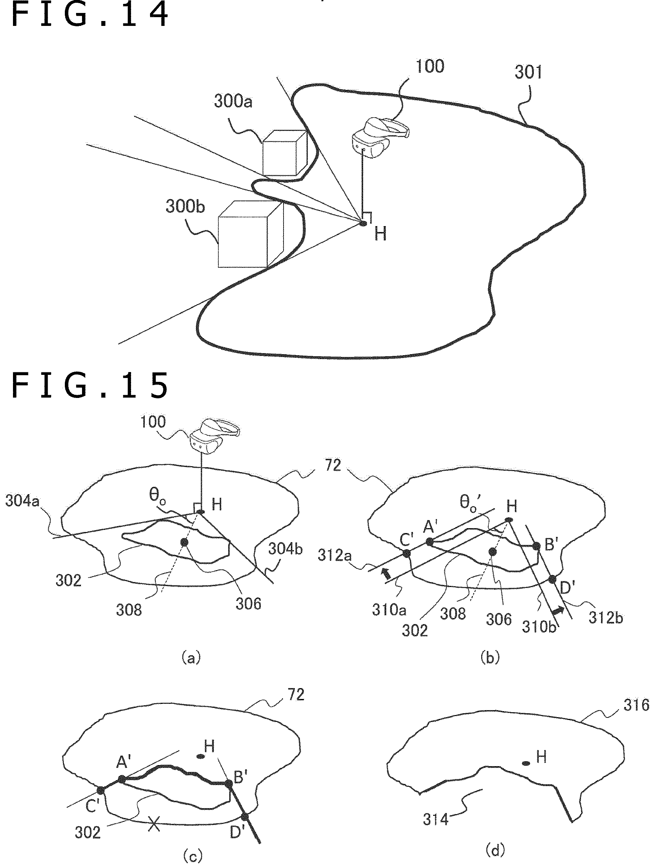

   FIG. 14 is a view for schematically illustrating the play area available after the correction in a case in which two new obstacles are detected in the present embodiment.
[FIG. 15]
   FIG. 15 is a view for describing another example of the correction procedure for the play area when the play area detection section detects a different obstacle inside the set play area in the present embodiment.
[FIG. 16]

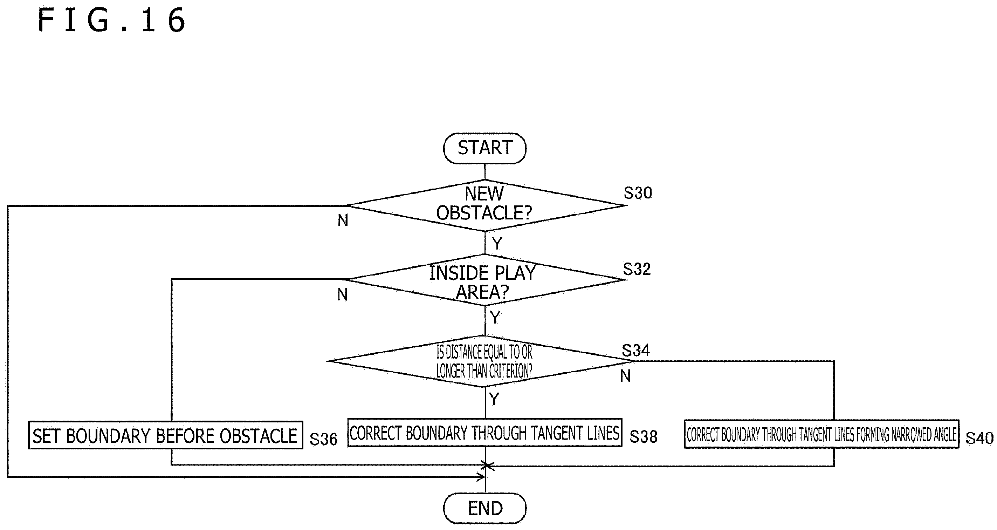

   FIG. 16 is a flowchart for illustrating a processing procedure by the play area detection section detecting the play area in the present embodiment.
[FIG. 17]

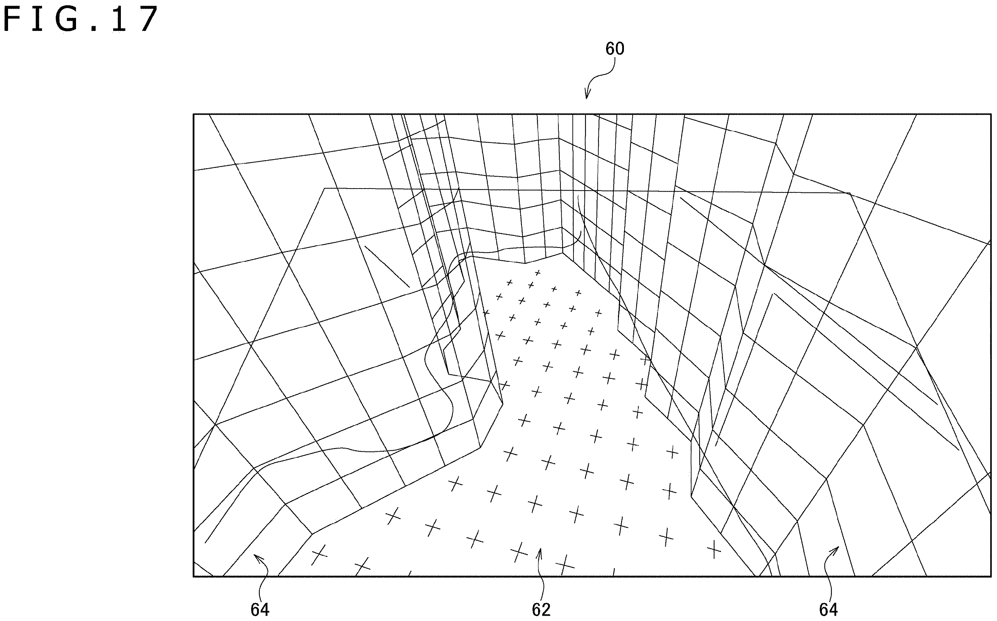

   FIG. 17 is a view for illustrating an example of a play area editing screen in the present embodiment.
[FIG. 18]

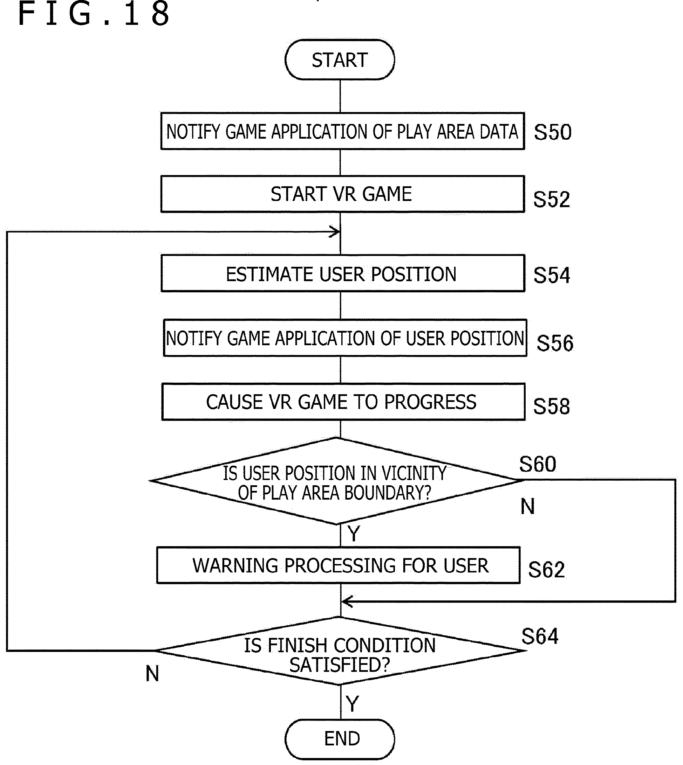

   FIG. 18 is a flowchart for illustrating an operation of the image generation device at the time of execution of a VR game in the present embodiment.

### [Description of Embodiment]

The present embodiment relates to an image display system which displays an image of an application on a head-mounted display worn on a head portion of a user. FIG. 1 illustrates an example of an appearance of a head-mounted display 100. The head-mounted display 100 according to the present embodiment includes an output mechanism section 102 and a wearing mechanism section 104. The wearing mechanism section 104 includes a wearing band 106 which runs around the head portion at the time of the wearing by the user to achieve fixation of the device.

The output mechanism section 102 includes a housing 108 having such a shape as to cover the left and right eyes in a state in which the user is wearing the head-mounted display 100, and is internally provided with a display panel facing the eyes at the time of the wearing. It is assumed that the display panel of the head-mounted display 100 according to the present embodiment does not have transparency. That is, the head-mounted display 100 is a non-transmissive head-mounted display.

Inside the housing 108, there may further be provided ocular lenses each of which is positioned between the display panel and the eye of the user when the head-mounted display 100 is worn and which extends the viewing angle of the user. The head-mounted display 100 may further include speakers or earphones at positions corresponding to the ears of the user at the time of the wearing. Moreover, the head-mounted display 100 incorporates a motion sensor and detects a translational motion and a rotational motion and further a position and a posture of the head portion of the user wearing the head-mounted display 100 at each time.

Moreover, the head-mounted display 100 includes a stereo camera 110 on a front surface of the housing 108. The stereo camera 110 captures a surrounding real space as a moving image in a field of view corresponding to the line of sight of the user. When the captured image is caused to be immediately displayed, what is generally called video see-through in which a scene of the real space in a direction toward which the user is facing is directly viewed can be achieved. Further, when a virtual object is drawn on an image of actual objects appearing in the captured image, augmented reality (AR) can be achieved.

FIG. 2 illustrates a configuration example of the image display system in the present embodiment. The image display system includes the head-mounted display 100, an image generation device 200, and a controller 140. The head-mounted display 100 is connected to the image generation device 200 via wireless communication. The image generation device 200 may further be connected to a server via a network. In that case, the server may provide, to the image generation device 200, data relating to an online application such as a game in which a plurality of users can participate via the network.

The image generation device 200 is an information processing device which identifies the positions of the viewpoints and the direction of the line of sight on the basis of the position and the posture of the head portion of the user wearing the head-mounted display 100, generates a display image such that a field of view corresponding thereto is achieved, and outputs the display image to the head-mounted display 100. For example, the image generation device 200 may generate, as the display image, a virtual world being a stage of an electronic game, while causing the game to progress, or may cause a moving image of either the virtual world or the real world for viewing or information provision to be displayed. Moreover, it is possible to give a deep sense of immersion into the displayed world to the user by causing a panorama image, which has a wide angle of view around the viewpoints of the user as the center, to be displayed on the head-mounted display 100. Note that the image generation device 200 may be a stationary type game machine or a personal computer (PC).

The controller 140 is a controller (for example, a game controller) which is held by the hands of the user and to which operations performed by the user for controlling the image generation in the image generation device 200 and the image display in the head-mounted display 100 are input. The controller 140 is connected to the image generation device 200 via wireless communication. As a modification example, one of or both the head-mounted display 100 and the controller 140 may be connected to the image generation device 200 through use of wired communication via a signal cable or the like.

FIG. 3 is a view for describing an example of an image world which the image generation device 200 causes to be displayed on the head-mounted display 100. In this example, a state in which a user 12 is present in a room being a virtual space is created. In a world coordinate system which defines the virtual space, as illustrated in FIG. 3, objects such as walls, a floor, a window, a table, and items on the table are disposed. The image generation device 200 defines a view screen 14 according to the positions of the viewpoints and the direction of the line of sight of the user 12 and draws the display image by causing images of the objects to appear thereon.

The image generation device 200 acquires the positions of the viewpoints and the direction of the line of sight (hereinafter, they are sometimes comprehensively referred to as a "viewpoint") of the user 12 at a predetermined rate from the head-mounted display 100 and changes the position and the direction of the view screen 14 according thereto. As a result, the image can be caused to be displayed on the head-mounted display 100 in the field of view corresponding to the viewpoints of the user. Moreover, when the image generation device 200 generates stereo images having parallax and causes the stereo images to be displayed on left and right regions of the display panel of the head-mounted display 100, stereoscopy of the virtual space for the user 12 can also be achieved. As a result, the user 12 can experience virtual reality as if the user 12 were present in the room of the displayed world.

FIG. 4 illustrates an internal circuit configuration of the image generation device 200. The image generation device 200 includes a central processing unit (CPU) 222, a graphics processing unit (GPU) 224, and a main memory 226. These portions are mutually connected to one another via a bus 230. To the bus 230, an input/output interface 228 is further connected. To the input/output interface 228, a communication section 232, a storage section 234, an output section 236, an input section 238, and a recording medium drive section 240 are connected.

The communication section 232 includes a peripheral device interface such as a universal serial bus (USB) interface and an Institute of Electrical and Electronics Engineers (IEEE) 1394 interface and a network interface such as that for a wired local area network (LAN) or a wireless LAN. The storage section 234 includes a hard disk drive, a nonvolatile memory, and the like. The output section 236 outputs data to the head-mounted display 100. The input section 238 receives data input from the head-mounted display 100 and receives data input from the controller 140. The recording medium drive section 240 drives a removable recording medium such as an optical disc, a magneto-optical disc, or a semiconductor memory.

The CPU 222 executes an operating system stored in the storage section 234, thereby controlling the entire image generation device 200. Moreover, the CPU 222 executes various types of programs (for example, a VR game application or the like) read from the storage section 234 or the removable recording medium and loaded on the main memory 226 or downloaded via the communication section 232. The GPU 224 has a function of a geometry engine and a function of a rendering processor, executes drawing processing according to a drawing command from the CPU 222, and outputs a drawing result to the output section 236. The main memory 226 includes a random access memory (RAM) and stores programs and data required for processing.

FIG. 5 illustrates an internal circuit configuration of the head-mounted display 100. The head-mounted display 100 includes a CPU 120, a main memory 122, a display section 124, and a sound output section 126. These sections are connected to one another via a bus 128. To the bus 128, an input/output interface 130 is further connected. To the input/output interface 130, a communication section 132 including an interface for wireless communication, a motion sensor 134, and the stereo camera 110 are connected.

The CPU 120 processes information acquired from each section of the head-mounted display 100 via the bus 128 and supplies data regarding the display image acquired from the image generation device 200 and sound to the display section 124 and the sound output section 126, respectively. The main memory 122 stores programs and data required for the processing in the CPU 120.

The display section 124 includes the display panel such as a liquid crystal panel or an organic electroluminescent (EL) panel and displays an image in front of the user wearing the head-mounted display 100. The display section 124 may achieve stereoscopy by displaying a pair of stereo images in regions corresponding to the left and right eyes. The display section 124 may further include the lenses each of which is positioned between the display panel and the eye of the user when the head-mounted display 100 is worn and extends the viewing angle of the user.

The sound output section 126 includes speakers or earphones provided at the positions corresponding to the ears of the user when the head-mounted display 100 is worn and allows the user to listen to sound. The communication section 132 is an interface which transmits and receives data to and from the image generation device 200, and achieves the communication through use of a known wireless communication technology such as Bluetooth (registered trademark). The motion sensor 134 includes a gyro sensor and an acceleration sensor and acquires an angular velocity and acceleration of the head-mounted display 100.

The stereo camera 110 is a pair of video cameras which captures the surrounding real space within the field of view corresponding to the viewpoints of the user from left and right viewpoints as illustrated in FIG. 1. An image which is captured by the stereo camera 110 and in which the surrounding space of the user appears is hereinafter also referred to as a "camera image." The camera image is considered as an image in which objects that are present in a line-of-sight direction of the user (typically the front direction of the user) appear. Data regarding a measurement value obtained by the motion sensor 134 and the captured image (camera image) obtained by the stereo camera 110 is transmitted to the image generation device 200 via the communication section 132 according to necessity.

In the image display system according to the present embodiment, there is set a play area defining a range of the real world in which the user wearing the head-mounted display 100 can move during the play of the application. The play area is considered as an area or a range which is a part of the surrounding space of the user (a space of the real world extending around the user) and in which the user is allowed to move around while the user is viewing an image of a virtual reality (hereinafter also referred to as a "VR image"). In a case in which the user is departing or has departed from the play area during the play of the application, the image display system provides, to the user, warning having such a content that paying attention is prompted or such a content that returning to the play area is prompted.

It is assumed that the application described above is a game application which causes the VR image to be displayed on the head-mounted display 100 and is hereinafter also referred to as a "VR game." For example, the VR game may be a tennis game which causes a VR image indicating a tennis court of the virtual world to be displayed and changes a position of a character on the tennis court in the virtual world according to a movement (such as walking) of the user in the real world.

In the present embodiment, the image generation device 200 automatically detects the play area in which the user wearing the head-mounted display 100 can move during the play of the application. At this time, the image generation device 200 identifies a position and a shape of each of surrounding objects in the real space captured by the stereo camera 110 of the head-mounted display 100, thereby determining the range in which the user can move without colliding with these objects. The image generation device 200 may further receive an operation performed by the user for editing the automatically detected play area and may change a shape of the play area according to this operation. As a result, the user can efficiently set the play area in any shape.

FIG. 6 is a block diagram for illustrating functional blocks of the image generation device. As described above, the image generation device 200 executes the general information processing such as the progress of the VR game and the communication with the server, and functional blocks relating to the setting of the play area are particularly illustrated in detail in FIG. 6. Note that at least some of the functions of the image generation device 200 illustrated in FIG. 6 may be implemented in a server connected to the image generation device 200 via the network.

Moreover, the plurality of functional blocks illustrated in FIG. 6 can be implemented by, in terms of hardware, a configuration of the CPU 222, the GPU 224, the main memory 226, the storage section 234, and the like illustrated in FIG. 4 and can be implemented by, in terms of software, a computer program implementing functions of the plurality of functional blocks. Thus, it will be understood by a person skilled in the art that these functional blocks can be implemented in various forms such as only the hardware, only the software, or combination thereof, and hence, the implementation is not limited to any one of these forms.

The image generation device 200 includes a data processing section 250 and a data storage section 252. The data processing section 250 executes various types of data processing. The data processing section 250 transmits and receives data to and from the head-mounted display 100 and the controller 140 via the communication section 232, the output section 236, and the input section 238 illustrated in FIG. 4. The data storage section 252 stores data referred to or updated by the data processing section 250.

The data storage section 252 includes an application storage section 254, a play area storage section 256, and a map storage section 258. The application storage section 254 stores data regarding the application (the VR game in the embodiment) which generates the VR image. The play area storage section 256 stores data relating to the play area. The data relating to the play area includes data indicating positions of a point group (for example, coordinate values of each point in the world coordinate system) forming a boundary of the play area.

The map storage section 258 stores map data for estimating a position of the head-mounted display 100 (that is, a position of the user wearing the head-mounted display 100). The map data according to the present embodiment includes a set of images each of which is an image (feature points appearing in this image) in which the room in which the user plays the VR game appears and is an image (feature points appearing in this image) in which positional relations (positions and directions) have been determined. Specifically, the map data includes a plurality of sets each associating the position of the head-mounted display 100, the line-of-sight direction, and a keyframe. Note that the map data may include other items required for what is generally called self-position estimation.

A keyframe in a certain set is data indicating features of an image seen at the position and the line-of-sight direction in the same set. The keyframe is an image generated on the basis of the camera image captured by the stereo camera 110 of the head-mounted display 100 and is an image including feature points equal to or more than a predetermined number. The number of feature points to be included in the keyframe may be 24 or more. The feature point may include a corner detected by a publicly-known corner detection method or may also be detected on the basis of a gradient of luminance. The keyframe is also considered as a set of partial images cut out from the camera image.

The data processing section 250 includes a system section 260, an application execution section 290, and a display control section 292. Functions of the plurality of functional blocks mentioned above may be implemented in a computer program. The CPU 222 and the GPU 224 of the image generation device 200 may implement the functions of the plurality of functional blocks described above by reading the computer program described above from the storage section 234 or a recording medium to the main memory 226 and then executing the computer program.

The application execution section 290 reads data regarding the application (the VR game in the embodiment) selected by the user, from the application storage section 254, and executes the application selected by the user. The display control section 292 transmits data regarding various images (for example, the VR image and the AR image) generated by the system section 260 and the application execution section 290 to the head-mounted display 100 and causes these images to be displayed on the display section 124 (display panel) of the head-mounted display 100.

The system section 260 executes processing of the system relating to the head-mounted display 100. The system section 260 provides a common service to a plurality of applications (for example, VR games) for the head-mounted display 100. The system section 260 includes a camera image acquisition section 262, a play area setting section 264, a map generation section 274, a notification section 278, a position estimation section 280, and a warning processing section 282.

The camera image acquisition section 262 acquires the camera image captured by the stereo camera 110 of the head-mounted display 100 and transmitted from the head-mounted display 100. The play area setting section 264 executes various types of processing relating to the setting of the play area. Specifically, the play area setting section 264 sets the play area on the basis of the camera image acquired by the camera image acquisition section 262 and the user operation input via the controller 140. The play area setting section 264 includes a play area detection section 266, a floor surface setting section 268, and a play area editing section 270.

The play area detection section 266 automatically detects the play area from the surrounding space of the user wearing the head-mounted display 100, on the basis of the camera image acquired by the camera image acquisition section 262. The floor surface setting section 268 receives an operation performed by the user for editing a height of a floor surface detected as the play area by the play area detection section 266 and changes the height of the floor surface according to this operation.

The play area editing section 270 receives an operation performed by the user for editing the play area automatically detected by the play area detection section 266 and changes the shape of the play area according to this operation. For example, the play area editing section 270 reduces the play area automatically detected by the play area detection section 266, according to the operation performed by the user.

In parallel with the detection of the play area by the play area detection section 266, the map generation section 274 generates a map for estimating the position of the user, on the basis of the camera image acquired by the camera image acquisition section 262. The map generation section 274 stores the generated map data in the map storage section 258. The map generation section 274 ends the generation of the map in a case in which a plurality of camera images which are obtained by capturing the surrounding space of the user from a plurality of directions and the number of which is more than a predetermined number have been input.

The notification section 278 notifies the application execution section 290 of information required to execute the VR game by the application execution section 290. The position estimation section 280 estimates a position of the user in the real world, in other words, the position of the user in the play area, on the basis of the map data stored in the map storage section 258 and the camera images acquired by the camera image acquisition section 262.

For example, the position estimation section 280 may collate the plurality of keyframes included in the map data and the camera image to each other and may estimate the position of the user on the basis of a result of the collation, the position of the head-mounted display 100 associated with each keyframe, and the line-of-sight direction. Moreover, the position estimation section 280 may use a publicly-known self-position estimation technology such as simultaneous localization and mapping (SLAM) to estimate the position of the user. The warning processing section 282 executes warning processing directed to the user, according to a relation between the boundary of the play area and the position of the user.

A description is now given of an operation of the image display system implemented by the configuration described above. FIG. 7 is a flowchart for illustrating an operation of the image generation device 200 when the play area is to be set. The user can select an initial setting or a resetting of the play area in a setting menu of a system of the head-mounted display 100. In a case in which the initial setting or the resetting of the play area is selected, the play area setting section 264 of the image generation device 200 causes a message having such a content that looking around is prompted to be displayed on the head-mounted display 100 via the display control section 292.

When the user, in response thereto, moves, with the head-mounted display 100 mounted on the head portion, while looking around, the head-mounted display 100 successively transmits data regarding a plurality of camera images to the image generation device 200. Each piece of the data regarding the plurality of camera images includes sensor data obtained at the time of the generation of each camera image. The sensor data includes the measurement values obtained by the motion sensor 134, and includes, for example, an angular velocity and acceleration of the head-mounted display 100. The camera image acquisition section 262 of the image generation device 200 acquires the data regarding the camera images transmitted from the head-mounted display 100 (S10).

The play area detection section 266 of the image generation device 200 automatically detects the play area in the surrounding space of the user on the basis of the camera images acquired in S10 (S12). Specifically, the play area detection section 266 may estimate a three-dimensional shape of the room of the user through use of a publicly-known method on the basis of the camera images and the sensor data corresponding to the camera images. The play area detection section 266 may detect a plane (typically the floor surface) perpendicular to a gravity direction indicated by the sensor data, on the basis of the estimated three-dimensional shape of the room, and may detect, as the play area, a result obtained by composing a plurality of detected planes having the same height. The play area detection section 266 stores, in the play area storage section 256, play area data including coordinate values of a point group forming the boundary of the play area.

The play area detection section 266 detects the height of the floor surface as the play area at the time of the play area detection. The height of the floor surface may be, for example, a distance between the floor surface and the head-mounted display 100 in the gravity direction. The play area detection section 266 stores, in the play area storage section 256, data indicating the height of the floor surface. In a case in which the position of the head-mounted display 100 is the origin, the height of the floor surface may be a minus one meter, for example.

The map generation section 274 of the image generation device 200 generates the map for estimating the position of the user, on the basis of the camera images acquired in S10, in parallel with the processing in S12 (S14). Until a predetermined condition indicating that the map data sufficient for estimating the position of the user is acquired is satisfied, the play area detection section 266 and the map generation section 274 use a new camera image to repeat the processing in S12 and S14 (N in S16). When the map data is sufficiently acquired, the play area detection section 266 ends the detection processing for the map area, and the map generation section 274 ends the generation processing for the map (Y in S16).

After that, the floor surface setting section 268 of the image generation device 200 generates a floor surface adjustment screen on the basis of the data indicating the height of the floor surface stored in the play area storage section 256. The floor surface adjustment screen may include an AR image obtained by superimposing an object indicating the floor surface (for example, a semitransparent object in a grid form) on the camera images acquired by the camera image acquisition section 262. The floor surface setting section 268 causes the floor surface adjustment screen to be displayed on the display panel of the head-mounted display 100 via the display control section 292. The floor surface setting section 268 receives an operation performed by the user for adjusting the height of the floor surface input to the floor surface adjustment screen and changes the height of the floor surface according to the operation performed by the user. The floor surface setting section 268 stores, in the play area storage section 256, data indicating the height of the floor surface available after the change (S18).

After that, the play area editing section 270 of the image generation device 200 generates an image indicating the play area automatically detected by the play area detection section 266. Specifically, the play area editing section 270 generates a play area editing screen on the basis of the play area data stored in the play area storage section 256. The play area editing screen includes an AR image obtained by superimposing an object indicating the play area on the camera image obtained by the camera image acquisition section 262. The display control section 292 of the image generation device 200 causes the play area editing screen to be displayed on the display panel of the head-mounted display 100 (S20).

The play area editing section 270 receives an operation performed by the user which is input to the play area editing screen 60 and is used to edit the play area (S22). Specifically, the play area editing section 270 changes the shape of the play area according to the operation performed by the user, that is, extends or reduces the play area according to the operation performed by the user. The play area editing section 270 updates the play area data stored in the play area storage section 256, by storing, in the play area storage section 256, data (for example, the coordinate values of the point group forming the boundary) regarding the play area available after the change in shape.

FIG. 8 schematically illustrates a behavior of the user in the loop processing in S10 to S14 of FIG. 7. The user wears the head-mounted display 100 on the head portion and moves while looking around in a room 30. Users 32 of FIG. 8 indicate positions of the user in this state. Note that the users 32 illustrated in FIG. 8 do not represent all of the positions to which the user moves, and only represent positions each at which the keyframe described below is generated. Each of arrows 34 indicates the line-of-sight direction of the user. A play area 36 illustrates an example of the play area to be set. While the user is moving as illustrated, the play area setting section 264 of the image generation device 200 causes the camera image acquired by the camera image acquisition section 262 to be displayed on the display panel of the head-mounted display 100 via the display control section 292, that is, executes the video-see-through which causes a state of the real space in the direction toward which the user faces to directly be seen by the user. As a result, safety of the user is increased.

FIG. 9 illustrates an example of the camera image acquired by the camera image acquisition section 262 in the processing in S10 of FIG. 7. Moreover, FIG. 10 illustrates a data example of a keyframe generated from the camera image of FIG. 9. The map generation section 274 uses a publicly-known method such as the corner detection method to extract a plurality of feature points 44 included in a camera image 40 and generates a keyframe 42 indicating the plurality of extracted feature points 44. In a case in which the map generation section 274 extracts 24 or more feature points 44 from the camera image 40, the map generation section 274 stores, in the map storage section 258, the keyframe 42 including the 24 or more extracted feature points 44 in association with the position and the line-of-sight direction of the user identified by the sensor data.

Moreover, the map generation section 274 acquires a coordinate position, in the three-dimensional space, of the feature point extracted from each camera image, through a well-known technology such as the stereo matching, thereby identifying an arrangement and a shape of an object that is present in the surrounding space. This three-dimensional space information is known as what is generally called an environment map. The map generation section 274 stores, as the map data, also the identified three-dimensional space information in the map storage section 258.

The map generation section 274 stores a plurality of criteria (hereinafter referred to as "bins") for deriving a score relating to a ratio of coverage of the input camera images (in the embodiment, the keyframes generated from the camera images) to the surrounding space of the user. The plurality of bins are the plurality of criteria dividing the surrounding space of the user in different forms.

FIG. 11 illustrates the plurality of bins which can be employed in the present embodiment. A bin 50, a bin 52, and a bin 54 each have a center at the position of the user and divides the surrounding space of the user while the gravity direction is considered as an axis. The bin 50 is a criterion which divides the surrounding space of the user into four divisions each of which has a center angle of 90 degrees, on the basis of the line-of-sight direction of the user at the start of the play area setting and a direction perpendicular to the line-of-sight direction. The bin 52 is obtained by shifting the phase by 45 degrees with respect to the bin 50. The bin 54 is a criterion which divides the surrounding space of the user into 16 divisions each of which has a center angle of 22.5 degrees. Hereinafter, an area defined by each of the bin 50, the bin 52, and the bin 54 in the surrounding space of the user is referred to as a "divided area."

The map generation section 274 derives the score relating to the ratio of the coverage of the plurality of input camera images (in the embodiment, the keyframes generated from the camera images) to the surrounding space of the user on the basis of the bin 50, the bin 52, and the bin 54. For example, in a case in which this score is equal to or higher than a predetermined threshold value in S16 of FIG. 7, the map generation section 274 determines that sufficient map data is acquired and hence ends the generation processing for the map.

Specifically, in a case in which the keyframe is generated from the camera image, the map generation section 274 considers, for each of the bin 50, the bin 52, and the bin 54, that the divided area matching the line-of-sight direction in which this keyframe is obtained is filled, and counts, as the score, a total of numbers each indicating the number of filled divided areas in each bin. When the map generation section 274 generates a new keyframe, the map generation section 274 adds, to the score, the number of filled divided areas in each bin through a similar algorithm.

For example, the map generation section 274 determines that the map data is not sufficient when the score is lower than a threshold value of "10." As a result, the detection processing for the play area and the generation processing for the map are continued. In a case in which the score becomes equal to or higher than the threshold value "10," the map generation section 274 determines that the map data is sufficiently acquired and hence ends the generation processing for the map. As a result, the detection processing for the play area is also ended. The threshold value of "10" for the score is defined as a value which can be exceeded when the user wearing the head-mounted display 100 looks around the surroundings of the user over 180 degrees, but cannot be exceeded in a case in which the user does not look around.

As described above, the play area detection section 266 gradually sets the boundary of the play area in parallel with the generation of the map data by the map generation section 274 in the period until the map data is sufficiently acquired. FIG. 12 schematically illustrating a scene in which the play area detection section 266 sets the boundary of the play area. The play area detection section 266 basically detects a surface in a direction substantially perpendicular to the floor surface in the map being generated by the map generation section 274, to identify that there is an object.

In the example of FIG. 12, as the user wearing the head-mounted display 100 looks around, three-dimensional position coordinates of a feature point of an obstacle (for example, an obstacle 70a or 70b) captured in the line-of-sight direction (for example, a direction S or S') are gradually identified. As a result, a region in the real space in which the presence of the obstacle is determined increases, and the play area detection section 266 simultaneously sets a boundary 72 of the play area, for example, before the detected obstacle. Note that the boundary 72 of the play area is represented as a line on the floor in FIG. 12 but, in practice, may include a surface in the direction perpendicular to the floor surface.

Until it is determined that the sufficient map data is obtained, on the basis of the criterion using the bins described above or the like, the play area detection section 266 appropriately updates the boundary 72 of the play area according to new detection of an obstacle. In this state, as illustrated in FIG. 12, there is such a case in which an obstacle 74 is further detected before the boundary 72 of the temporarily set play area, that is, inside the play area. This case corresponds to, for example, a case in which the height of the obstacle 74 is low and hence the obstacle 74 does not appear in the field of view of the stereo camera 110 when the farther obstacle 70b is detected.

At this time, it is conceivable that the play area detection section 266 changes the boundary 72 of the play area to a boundary 76 before the obstacle 74. However, in this case, it is also conceivable that the play area excessively decreases and hence joy of the game decreases by half. Thus, the play area detection section 266 corrects the play area according to such a rule that the play area does not unnecessarily decreases.

Specifically, the play area detection section 266 limits the obstacle 74 and a region therebehind as viewed from the head-mounted display 100 when the obstacle 74 is detected, and corrects the play area boundary in such a manner as to remove this region from the play area. In other words, the play area detection section 266 does not exclude, from the play area, left and right regions (side regions) of the obstacle 74 as viewed from the head-mounted display 100.

FIG. 13 is a view for describing an example of a correction procedure for the play area when the play area detection section 266 detects another obstacle inside the set play area. (a) illustrates a situation in which a new obstacle is detected before the temporary boundary 72 of the play area as in FIG. 12. In this situation, a contour 80 indicates a contour when a three-dimensional shape of the newly detected obstacle is projected on the floor surface. The play area detection section 266 generates a contour 80 on the basis of three-dimensional position coordinates of feature points of the obstacle.

Moreover, the play area detection section 266 obtains, as an observation point H, a position at which a perpendicular line from a center of gravity of the head-mounted display 100 when the new obstacle is detected intersects with the floor surface. The observation point H corresponds to the position of the user on the floor surface. After that, as illustrated in (b), the play area detection section 266 generates tangent lines 82a and 82b from the observation point H to the contour 80 and obtains tangent points A and B and intersections C and D between the tangent lines 82a and 82b and the boundary 72.

After that, as illustrated in (c), the play area detection section 266 deletes a portion which is a part of the original boundary 72 and is between the intersections C and D, and sets, as a new boundary, a straight line AC, a straight line BD, and a portion which is a part of the contour 80, is on a side closer to the observation point H, and is between the tangent points A and B which are indicated as thick lines. As a result, as illustrated in (d), a new boundary 86 of a new play area which is obtained by removing the newly detected obstacle and a region 84 therebehind is formed. It is possible to avoid, by correcting the play area through use of the procedure described above, a collision with an obstacle while maximally allowing the user to move to the side of the obstacle.

Note that, in FIG. 13, the two-dimensional processing on the floor surface is illustrated, but the boundary of the play area is set in the tree-dimensional space including the floor surface and the axis in the vertical direction as described above. That is, the boundary 86 of the new play area may include, in practice, the floor surface and a plane in the vertical direction. In this case, it can also be considered that the observation point H is the position of the head-mounted display 100 or the user when the obstacle is detected and that the tangent lines 82a and 82b to the contour 80 are two vertical surfaces tangent to the obstacle. Moreover, the portion which is a part of the contour 80 and is between the tangent points A and B is also considered as a third vertical surface which is externally in contact with the obstacle along the obstacle and intersects with the two vertical surfaces on the user side. Boundaries illustrated in FIG. 14 and FIG. 15 are also similar to this.

FIG. 14 schematically illustrates a play area available after the correction in a case in which two new obstacles are detected. The play area detection section 266 independently applies the correction of the play area boundary in a procedure similar to that of FIG. 13 to each of obstacles 300a and 300b. With a new boundary 301 formed consequently, a region between the obstacles 300a and 300b can be left as the play area as much as possible. As a result, it is possible to suppress a reduced amount of the play area while avoiding collisions with these obstacles. A case in which three or more obstacles are detected is similar thereto.

With the correction procedure for the play area boundary illustrated in FIG. 13, a shape of the boundary available after the correction depends on the position of the head-mounted display 100 when the obstacle is newly detected. Qualitatively, as the position of the head-mounted display 100 when an obstacle is detected is farther from this obstacle, an apparent width of the obstacle becomes narrower, and hence, the width of the play area to be reduced can also be narrowed.

For example, in a game in which the user does not dynamically move, it is expected that a distance between the head-mounted display 100 and this obstacle be maintained to a certain degree even during the game play. Thus, in such a respect that, even when a somewhat wide play area around this obstacle is left, a possibility that the user departs from the play area due to momentum and collides with the obstacle is low, it can be considered as logical that the reduced amount of the play area for an obstacle detected at a far location can be suppressed.

Meanwhile, when an obstacle is conversely detected at a short distance and hence the apparent width is wide, there is a risk that the region therebehind may be excessively excluded from the play area. Thus, the play area detection section 266 checks the distance between the head-mounted display 100 and the detected obstacle through use of a predetermined index at the time of the detection of the obstacle, and switches the correction procedure for the play area boundary. As a result, the situation in which the play area is excessively reduced depending on the position of the head-mounted display 100 at the time of the detection of the obstacle is avoided, and hence, the play area can stably be secured.

FIG. 15 is a view for describing another example of the correction procedure for the play area when the play area detection section 266 detects a different obstacle inside the set play area. Representation of FIG. 15 is similar to that of FIG. 13, and (a) illustrates the situation in which a new obstacle is detected before the temporary boundary 72 of the play area. A contour 302 is a contour obtained when a three-dimensional shape of the newly-detected obstacle is projected on the floor surface, and the observation point H represents the position at which the perpendicular line from the center of gravity of the head-mounted display 100 when the new obstacle is detected intersects with the floor surface.

The play area detection section 266 evaluates, on the basis of the predetermined index, a distance between the head-mounted display 100 and the newly detected obstacle when the obstacle is newly detected, and employs the correction procedure of FIG. 15 when the play area detection section 266 determines that the distance is shorter than a predetermined criterion. In FIG. 15, tangent lines 304a and 304b from the observation point H to the contour 302 are generated, and an angle θₒ formed between any one of the tangent lines 304a and 304b and a center line 308 which extends from the observation point H and passes through a center point 306 of an internal region of the contour 302 is set to the index of the distance between the head-mounted display 100 and the obstacle.

Naturally, as the angle θₒ is larger, the distance is shorter. This index can also be considered as an index which also reflects an original size of the obstacle and indicates a degree of a possibility that the play area is excessively reduced. However, the index to be used is not limited to this index, and the simple distance between the observation point H and the contour 302 or the like may be employed. In a case in which the angle θₒ is used as the index and, for example, is larger than a threshold value θₜₕ such as 45°, the play area detection section 266 determines that the distance between the head-mounted display 100 and the obstacle is short and, consequently, there is a high possibility that the play area is excessively reduced when the method of FIG. 13 is employed.

Note that an upper limit threshold value larger than the threshold value θₜₕ may be set to the angle θₒ. That is, when the angle θₒ is close to 180°, it is conceivable that the observation point H is in contact with the contour 302 or overlaps an internal region of the contour 302. In this case, there is a high possibility that the contour 302 is not a contour of a real obstacle but results from the body of the user himself or herself. Thus, when the angle θₒ is larger than a predetermined threshold value close to 180°, the play area detection section 266 does not correct the play area boundary. In a case in which the distance between the observation point H and the contour 302 is used as the index, when this distance is equal to or shorter than the threshold value such as 0, the play area detection section 266 does not correct the play area boundary.

In a case in which the angle θₒ is equal to or smaller than the upper limit threshold value and is larger than the threshold value θₜₕ such as 45° used to switch the correction method, the play area detection section 266 generates, as illustrated in (b), in place of the original tangent lines 304a and 304b, new tangent lines 312a and 312b forming an angle 2θₒ' smaller than an angle 2θₒ. The tangent lines 312a and 312b are obtained by parallelly translating lines 310a and 310b, which are symmetrical about the center line 308 passing through the observation point H and each form an angle θₒ' (< θₒ) to the center line 308, in such a manner as to be tangent to the contour 302.

The angle θₒ' is set to, for example, 25°. Further, the play area detection section 266 obtains tangent points A' and B' of the new tangent lines 312a and 312b to the contour 302, respectively, and intersections C' and D' between the tangent lines 312a and 312b and the boundary 72, respectively. After that, as illustrated in (c), the play area detection section 266 deletes a portion which is a part of the original boundary 72 and is between the intersections C' and D', and sets, as a new boundary, a straight line A'C', a straight line B'D', and a portion which is a part of the contour 302, is on a side closer to the observation point H, and is between the tangent points A' and B'.

As a result, as illustrated in (d), a new boundary 316 of a new play area which is obtained by removing the newly detected obstacle and a region 314 therebehind. As a result, it is possible to suppress the reduced amount of the play area compared with the correction of the play area through use of the original tangent lines 304a and 304b. Note that the illustrated procedure is an example, and the line tangent to the contour 302 may be, for example, a polygonal line or a curved line. Note that, with the illustrated method, it is possible to certainly exclude the obstacle from the play area through use of simple calculation.

FIG. 16 is a flowchart for illustrating a processing procedure by the play area detection section 266 detecting the play area. This processing corresponds to S12 of FIG. 7. The play area detection section 266 determines whether or not a new obstacle or a new surface of an obstacle which has already been detected is detected, on the basis of the feature points extracted from the camera images (S30). When none of a new obstacle and a new surface are detected, the play area detection section 266 ends the processing (N in S30). When a new obstacle or a new surface is detected (Y in S30), the play area detection section 266 determines whether or not the detected obstacle or surface is before the play area boundary temporarily set, that is, inside the play area (S32) .

In detail, the play area detection section 266 checks whether or not this obstacle is positioned between the head-mounted display 100 when the obstacle is detected in S30 and the boundary of the play area temporarily set. When such a relation does not hold true (N in S32), the play area detection section 266 considers that the play area boundary in this orientation is not set, sets the play area boundary before the obstacle, and ends the processing (S36). Note that, in a case in which the detected obstacle is present beyond the play area boundary set already, the play area detection section 266 may cause the processing to directly be ended, which is omitted in the flowchart.

When the detected obstacle or surface is inside the play area (Y in S32), the play area detection section 266 determines whether or not the distance between the head-mounted display 100 when the obstacle is detected in S30 and this obstacle is equal to or longer than the criterion (S34). In the example of FIG. 15, the angle θₒ is set to the index, and it is determined that the distance is equal to or longer than the criterion when the angle θₒ is equal to or smaller than the threshold value θₜₕ. In a case in which the distance between the head-mounted display 100 and the obstacle is equal to or longer than the criterion (Y in S34), the play area detection section 266 corrects the play area boundary through use of the tangent lines of the contour of the obstacle passing through the observation point H, as illustrated in FIG. 13 (S38).

Specifically, the new boundary is generated through use of the portion of the contour of the obstacle between the tangent points and the portions of the tangent lines each having the tangent point as a terminal point. In a case in which the distance between the head-mounted display 100 and the obstacle is shorter than the criterion (N in S34), the play area detection section 266 corrects the play area boundary through use of the tangent lines of the contour of the obstacle forming the angle smaller than that formed between the tangent lines passing through the observation point H, as illustrated in FIG. 15 (S40).

Specifically, the play area detection section 266 generates the two lines which form the angle smaller than that formed between the tangent lines in S38 and are symmetrical about the center line of the contour of the obstacle, and parallelly translates the two lines to the positions at which the lines are tangent to this contour. After that, the new boundary is generated through use of the portion of the contour of the obstacle between the tangent points and the portions of the tangent lines each having the tangent point as the terminal point. The boundary of the play area can finally be completed by repeating the illustrated processing each time when a new obstacle is detected. It is preferred that the play area set by the play area detection section 266 as described above be adjustable by the user.

FIG. 17 illustrates an example of the play area editing screen. The play area editing screen 60 includes a play area 62 and a boundary 64. The play area 62 is an image which indicates a play area (typically a floor surface without obstacles) and may be an image which indicates, for example, a semitransparent object in a grid form. The boundary 64 is an image which indicates a boundary of the play area 62 and is an image which vertically intersects with the play area at the boundary of the play area 62. The boundary 64 may also be, for example, a semitransparent object in a grid form. As described above, the play area editing section 270 receives a user operation of deforming and increasing/reducing the displayed play area and stores, in the play area storage section 256, data regarding the play area available after the editing.

FIG. 18 is a flowchart for illustrating an operation of the image generation device 200 at the time of the execution of the VR game. This flowchart is started by the user wearing the head-mounted display 100 and executing a start operation which is for the VR game and is directed to the image generation device 200. In response thereto, the notification section 278 of the image generation device 200 transmits, to the application execution section 290, the data regarding the play area stored in the play area storage section 256, for example, data indicating a shape and a size of the play area (S50) .

After that, the application execution section 290 reads program data regarding the VR game from the application storage section 254 and starts the VR game (S52). For example, the application execution section 290 may dispose a game item within a range of the play area in the virtual space depicting a game world, thereby allowing the user to get this game item. The display control section 292 causes an image (for example, the VR image) of the VR game generated by the application execution section 290 to be displayed on the display panel of the head-mounted display 100.

The camera image acquisition section 262 of the image generation device 200 successively acquires the camera images successively transmitted from the head-mounted display 100, and the position estimation section 280 successively estimates the position and the line-of-sight direction of the user in the real world (S54). The notification section 278 notifies the application execution section 290 of the position and the line-of-sight direction of the user estimated by the position estimation section 280 (S56). The application execution section 290 causes the VR game to progress according to the estimated position and line-of-sight direction of the user (S58). For example, the application execution section 290 may move a user character in the VR game according to a change in the position of the user in the real world (in other words, in the play area).

The warning processing section 282 of the image generation device 200 detects, in a case in which the position of the user in the real world reaches a boundary vicinity of the play area, for example, in a case in which the distance from the head-mounted display 100 worn by the user to the boundary of the play area becomes equal to or shorter than a predetermined threshold value (for example, 30 cm) (Y in S60), this state. At this time, the warning processing section 282 executes predetermined warning processing for the user (S62).

For example, the warning processing section 282 may pass, in a case in which the position of the user reaches the boundary vicinity of the play area, an image indicating the boundary of the play area (for example, the boundary 64 illustrated in FIG. 17) to the display control section 292. The display control section 292 may cause, as the display image, an image obtained by superimposing an image indicating the boundary of the play area on the game image generated by the application execution section 290 to be displayed on the display panel of the head-mounted display 100. Moreover, the warning processing section 282 may cause the video-see-through image to be displayed on the display panel of the head-mounted display 100 via the display control section 292 in a case in which the position of the user in the real world reaches the boundary vicinity of the play area or crosses the boundary of the play area.

Moreover, the warning processing section 282 may first cause the image indicating the boundary of the play area to be displayed in a case in which the position of the user in the real world reaches the boundary vicinity of the play area (for example, 30 cm), and may then cause the video-see-through image to be displayed in a case in which the position of the user in the real world further reaches the boundary vicinity of the play area (for example, 10 cm). Meanwhile, when the position of the user in the real world is not in the boundary vicinity of the play area (N in S60), S62 is skipped. In a case in which a predetermined finish condition is satisfied, such as a case in which the execution of the VR game is stopped by the user (Y in S64), the flow of FIG. 18 is finished. When the finish condition is not satisfied (N in S64), the processing returns to S54, and the VR game is continued.

According to the present embodiment, the image generation device sets the play area in which the user wearing the head-mounted display can safely move around. Specifically, the image generation device detects an obstacle on the basis of the captured image obtained by the stereo camera mounted to the head-mounted display and sets the boundary of the play area in such a manner as to exclude this obstacle. At this time, when a new obstacle is detected inside the play area temporarily set, the image generation device uses the tangent lines directed from the head-mounted display at the time of the detection toward the contour of this obstacle, to set a new play area boundary.

As a result, a necessary minimum region being the region of the obstacle and the region therebehind as viewed from the head-mounted display can be excluded from the play area. The position of the head-mounted display at the time of the detection is estimated as close to the position of the user at the time of the execution of content such as the game play, and hence, the collision with the obstacle can be avoided while the substantial reduced amount of the play area is suppressed as much as possible by keeping a front region of the obstacle in the play area and excluding the region therebehind.

Moreover, in a case in which the distance between the obstacle at the time of the detection and the head-mounted display is determined as short, the extension of the range to be excluded from the play area is suppressed by reducing the angle formed between the tangent lines. As a result, the influence of the position of the head-mounted display at the time of the detection of the obstacle on the size of the play area can be eliminated as much as possible, and hence, a necessary and sufficient play area can easily be set regardless of the situation.

A description has been given of the present invention on the basis of the embodiment. The embodiment is illustrative, and it is to be understood by those who are skilled in the art that various modification examples can be made to the combinations of each component and each processing process thereof and that these modification examples are also within the scope of the present invention.

### [Industrial Applicability]

As described above, the present invention can be applied to an information processing device, an image generation device, a game machine, a portable terminal, a head-mounted display, an image display system including at least any one thereof, and the like.

### [Reference Signs List]

- 100:: Head-mounted display
- 200:: Image generation device
- 256:: Play area storage section
- 264:: Play area setting section
- 266:: Play area detection section
- 270:: Play area editing section
- 274:: Map generation section
- 280:: Position estimation section
- 282:: Warning processing section
- 292:: Display control section

## Claims

1. An information processing device comprising:
a camera image acquisition section that acquires data regarding a camera image which is captured by a camera mounted to a head-mounted display and in which a surrounding space of a user appears;
a play area setting section that detects an obstacle in the surrounding space on a basis of the camera image and sets, on a basis of a result of the detection, a play area in which the user is allowed to move; and
a warning processing section that executes warning processing for the user according to a relation between a position of the user during play of an application that uses the head-mounted display and a boundary of the play area,
wherein the play area setting section identifies a positional relation between the boundary of the set play area and a newly detected obstacle and determines whether or not to correct the boundary of the play area according to a result of the identification.

2. The information processing device according to claim 1, wherein the play area setting section limits, when the obstacle is present inside the play area, a region of the obstacle and a background thereof as viewed from the head-mounted display at a time of the detection and corrects the boundary such that the region is removed from the play area.

3. The information processing device according to claim 2, wherein the play area setting section sets, as the boundary available after the correction, a line including, on a floor surface, two tangent lines that pass through the position of the head-mounted display at the time of the detection and are tangent to a contour of the obstacle and a portion which is a part of the contour, is on a side closer to the head-mounted display, and is between tangent points.

4. The information processing device according to claim 2 or 3, wherein the play area setting section uses a predetermined index to check a distance between the obstacle and the head-mounted display at the time of the detection and switches a correction method for the boundary according to a result of the check.

5. The information processing device according to claim 3, wherein the play area setting section uses a predetermined index to check a distance between the obstacle and the head-mounted display at the time of the detection and, when determining that the distance is shorter than a criterion, uses other two tangent lines forming an angle smaller than an angle formed between the two tangent lines passing through the position of the head-mounted display, to determine the boundary available after the correction.

6. The information processing device according to claim 5, wherein the play area setting section generates the other two tangent lines by translating, in parallel, two lines passing through the position of the head-mounted display at the time of the detection and forming a predetermined angle symmetrical about a center line of the contour such that the two lines become tangent to the contour.

7. The information processing device according to any one of claims 4 to 6, wherein the play area setting section uses, as the index, a magnitude of the angle between the two tangent lines passing through the position of the head-mounted display, to determine how short the distance is.

8. The information processing device according to any one of claims 2 to 7, wherein the play area setting section limits, when a plurality of the obstacles are present inside the play area, the region of each obstacle and the background thereof independently and corrects the boundary such that the region is removed from the play area.

9. An information processing method comprising:
a step of acquiring data regarding a camera image which is captured by a camera mounted to a head-mounted display and in which a surrounding space of a user appears;
a step of detecting an obstacle in the surrounding space on a basis of the camera image and setting, on a basis of a result of the detection, a play area in which the user is allowed to move; and
a step of executing warning processing for the user according to a relation between a position of the user during play of an application that uses the head-mounted display and a boundary of the play area,
wherein the step of setting the play area identifies a positional relation between the boundary of the set play area and a newly detected obstacle and determines whether or not to correct the boundary of the play area according to a result of the identification.

10. A computer program for causing a computer to implement:
a function of acquiring data regarding a camera image which is captured by a camera mounted to a head-mounted display and in which a surrounding space of a user appears;
a function of detecting an obstacle in the surrounding space on a basis of the camera image and setting, on a basis of a result of the detection, a play area in which the user is allowed to move; and
a function of executing warning processing for the user according to a relation between a position of the user during play of an application that uses the head-mounted display and a boundary of the play area,
wherein the function of setting the play area identifies a positional relation between the boundary of the set play area and a newly detected obstacle and determines whether or not to correct the boundary of the play area according to a result of the identification.
